# EUROPEAN PATENT APPLICATION

(11) **EP 1 770 695 A1**
(43) Date of publication of application: **04.04.2007**
(21) Application number: 05765676.1
(22) Date of filing: 12.07.2005
(51) Int. Cl.: G11B 7/24

(54) **MULTILAYER OPTICAL RECORDING MEDIUM AND MANUFACTURING METHOD THEREOF**

(30) Priority: 16.07.2004 JP 2004210346
(71) Applicant: SONY CORPORATION, Tokyo 141 (JP)
(72) Inventor: NAKAOKI, Ariyoshi c/o SONY CORPORATION,, Shinagawa-ku, Tokyo 1410001 (JP); YAMAMOTO, Masanobu c/o SONY CORPORATION,, Shinagawa-ku, Tokyo 1410001 (JP)
(74) Representative: Körber, Martin Hans
(86) International application number: PCT/JP2005/012841
(87) International publication number: WO 2006/009010

(57) **Abstract**

The present invention is directed to a multi-layered optical recording medium adapted to satisfy reflection factor required at the time of recording/reproduction of digital data based on the standards of CD (Compact Disc) and DVD (Digital Versatile Disc), wherein a first transparent base (12), a HD layer (11), a second transparent base (22) and a CD layer (21) are laminated in order; one semi-transparent layer (31) or more having reflection characteristic with respect to wavelength of a first reproduction signal and having transmission characteristic with respect to wavelength of a second reproduction signal is or are formed on the HD layer; a metallic film (23) having reflection characteristic with respect to wavelength of the second reproduction signal is formed on the CD layer, and total film thickness of the semi-transparent film or films is expressed as α × m × λ × n when wavelength of the second reproduction signal is λ and refractive index of the first transparent base is n (In this expression, 1.0 ≤ α ≤ 1.3, and m is integer equal to 1 (one) or more).

## Description

### Technical Field

The present invention relates to a multi-layered (multilayered) optical recording medium including plural information recording layers and a method of manufacturing the same, and more particularly to a multi-layered optical recording medium in which two information recording layers are superposed (laminated) so that there is provided a single recording medium.

This Application claims priority of the Japanese Patent Application No. 2004-210346 filed on July 16, 2004, the entirety of which is incorporated by reference herein.

### Background Art

Hitherto, as an optical recording medium in which pit patterns each consisting of very small uneven portions corresponding to information signals to be recorded are formed on one surface of a transparent base (substrate) having light transmission characteristic to irradiate light beams onto the pit patterns in a manner transmitted through the transparent base to detect, by a light detector, reflected light beams reflected from the pit patterns to thereby permit reproduction of the recorded information signal, there are widely used Compact Discs (Compact Discs).

In the case of CD, pit trains in which the shortest pit length is caused to be 0.9µm are formed at a track pitch of 1.6µm on a transparent base having thickness of 1.2 mm so that digital data such as music and/or image, etc. are recorded thereon. The recording capacity of the CD is caused to be about 650M bytes. As a format in conformity with the standard of the CD, there are CD-ROM and/or Video-CD, etc.

On the other hand, Digital Versatile Discs (DVDs) having recording density caused to be greatly increased as compared to that of CD have been developed and have been rapidly popularized. In the case of the DVD, for the purpose of improving recording density as compared to optical discs conventionally used such as CD, etc., both the size in the radial direction of pit for recording information and the size in the circumferential direction thereof are caused to be one half of those of the CD or lower than that. Moreover, for the purpose of lessening the influence of deterioration of reproduction signal quality based on warp and/or bending of the disc, there is employed a configuration in which the thickness of the base is caused to be 0.6 mm and two bases (substrates) are stuck to each other for the purpose of improving mechanical strength. In the case of the DVD, pit trains in which track pitch is caused to be 0.74 µm and the shortest pitch length is caused to be 0.4 µm are formed so that digital data such as music and/or image, etc. are recorded. The recording capacity of the DVD is caused to be about 5G bytes.

In the case of DVD, information can be recorded onto one or both bases stuck to each other. Moreover, plural information recording layers may be provided at one or both respective bases stuck to each other. Namely, with respect to the structure of the optical disc, there are versatile or various forms such as single sided single layer reproduction optical disc, both sided single layer reproduction optical disc, multi-layered single sided optical disc, and/or multi-layered both sided optical disc, etc.

Moreover, particularly, in recent years, Super Audio Compact Discs (SACD) as new music media utilizing one bit audio signal system (DSD: Direct Stream Digital) using ΣΔ modulation (sigma. delta modulation) has been developed and are being popularized. This DSD signal has high speed sampling frequency which is 64 times larger than sampling frequency (44.1 kHz) of digital audio signal of the PCM signal system used in the above-described conventional CD, and permits signal reproduction having a frequency above audible frequency.

As variation of this SACD, there is single layer disc comprised of only single HD (High Definition) layer provided with information area of high density complying with SACD. It is to be noted that information to be recorded into the HD layer is not limited to music information, but, e.g., digital data such as image, etc. based on the above-described standard of DVD may be recorded thereinto. Moreover, as another variation of SACD, there are dual layer disc on which two HD layers are laminated, and hybrid disc on which one HD layer and one CD layer in conformity with the above-described CD standard are laminated.

In the case of reproducing the hybrid disc at the SACD, the CD layer is reproduced by using laser beams having wavelength of 780 nm by pick-up for CD having ordinary numerical aperture (NA) of 0.45, and the HD layer is reproduced by using laser beams having wavelength of 650 nm by pick-up for HD having numerical aperture of 0.6.

Meanwhile, it is general that the above-described hybrid disc of SACD is caused to be of the configuration in which a first transparent base or substrate, a HD layer, a second transparent base or substrate and a CD layer are laminated in order, and is caused to be of the configuration in which the HD layer is coated by semi-transparent film having high refractive index. However, in the semi-transparent film actually used, the standard of refractive index required in recording or reproducing digital data based on the standard of DVD cannot be satisfied. As a result, there were many cases where it becomes difficult to perform stable recording/reproduction of DVD data.

### Disclosure of the Invention

### Problems to be solved by the invention

In view of the above, the present invention has been proposed in view of the above-described problems, and its object is to provide a multi-layered optical recording medium which satisfies specification of reflection factor required at the time of recording/reproduction of digital data based on the standards of CD and DVD in the hybrid disc in the SACD, and a method of manufacturing such a multi-layered optical recording medium.

A multi-layered optical recording medium to which the present invention is applied is directed to a multi-layered optical recording medium in which at least a first transparent base or substrate, a first information recording layer, a second transparent base or substrate and a second information recording layer are laminated in order, wherein one semi-transparent film or more having reflection characteristic with respect to wavelength of a first reproduction signal and having transmission characteristic with respect to wavelength of a second reproduction signal, and having refractive index higher than that of the first transparent base is or are formed on the first information recording layer, a reflection film having reflection characteristic with respect to the wavelength of the second reproduction signal is formed on the second information recording layer, and total film thickness of the semi-transparent film or films is expressed as α × m × λ × n when wavelength of the second reproduction signal is λ and refractive index of the first transparent base is n (In the above expression, 1.0 ≤ α ≤ 1.3 and m is integer equal to 1 or more).

Another multi-layered optical recording medium to which the present invention is applied is directed to a multi-layered optical recording medium in which at least a first transparent base or substrate, a first information recording layer, a second transparent base or substrate and a second information recording layer are laminated in order, wherein one semi-transparent film or more having reflection characteristic with respect to wavelength of a first reproduction signal and having transmission characteristic with respect to wavelength of a second reproduction signal, and having refractive index higher than that of the first transparent base is or are formed on the first information recording layer, a reflection film having reflection characteristic with respect to wavelength of the second reproduction signal is formed on the second information recording layer, the semi-transparent film is adapted so that a Si-H compound layer, a SiO₂ layer and a Si-H compound layer are laminated in order, and the SiO₂ layer is caused to be of the configuration having film thickness of 5 nm to 20 nm.

Moreover, the present invention is directed to a method of manufacturing a multi-layered optical recording medium in which at least a first transparent base or substrate, a first information recording layer, a second transparent base or substrate and a second information recording layer are laminated in order, the method including: forming the first transparent base on which the first information recording layer is provided and the second transparent base on which the second information recording layer is provided; subsequently forming, onto the information recording layer provided on the first transparent base, a semi-transparent film having reflection characteristic with respect to wavelength of a first reproduction signal and having transmission characteristic with respect to wavelength of a second reproduction signal, and having refractive index higher than that of the first transparent base and film thickness expressed as α × m × λ× n when wavelength of the second reproduction signal is λ and refractive index of the first transparent base is n (In the above expression, 1.0 ≤ α ≤ 1.3); forming a reflection film having reflection characteristic with respect to wavelength of the second reproduction signal onto the second information recording layer provided on the second transparent base; and superposing the first transparent base onto a plane surface of the side opposite to the plane surface where the second information recording layer is formed of the second transparent base with a plane surface where the semi-transparent film is formed being as a superposing plane surface to bond, by adhesive agent, the superposing surfaces of the first and second transparent bases to integrate them.

In the multi-layered optical recording medium to which the present invention is applied, setting is made such that film thickness of the semi-transparent film is expressed as α×m×λ×n (In the expression, 1.0 ≤ α ≤ 1.3, and m is integer equal to 1 or more) when wavelength of the second reproduction signal is λ and refractive index of the first transparent base is n so that specification of reflection factor in reproducing data based on both standards of CD and DVD is satisfied. Thus, stable reproducing operations can be realized with respect to both CD and DVD.

Still further objects of the present invention and practical merits obtained by the present invention will become more apparent from the embodiments which will be explained below with reference to the attached drawings.

### Brief Description of the Drawings

FIG. 1 is an exploded perspective view showing a multi-layered optical recording medium to which the present invention is applied.
FIG. 2 is a cross sectional view of the multi-layered optical recording medium to which the present invention is applied.
FIG. 3 is a characteristic diagram showing the relationship between reflection factor R_{HD} of HD layer and reflection factor R_{CD} of CD player with respect to film thickness Th of semi-transparent film of the multi-layered optical recording medium.
FIG. 4 is a cross sectional view showing another configuration of the multi-layered optical recording medium to which the present invention is applied.
FIG. 5 is a characteristic diagram showing the relationship between reflection factor R_{HD} of HD layer and reflection factor R_{CD} of CD layer with respect to film thickness Th of the semi-transparent film of the multi-layered optical recording medium provided with SiO₂ layer.
FIG. 6 is a characteristic diagram showing the relationship between reflection factor R_{HD} of HD layer and reflection factor R_{CD} of CD layer with respect to film thickness Th of the semi-transparent film of the multi-layered optical recording medium provided with SiO₂ layer.
FIG. 7 is a characteristic diagram showing the relationship between reflection factor R_{HD} of HD layer and reflection factor R_{CD} of CD layer with respect to film thickness Th of semi-transparent film of the multi-layered optical recording medium provided with SiO₂ layer.
FIG. 8 is a perspective view showing the state where UV (Ultraviolet) hardening resin is coated onto the first and/or second transparent bases.
FIG. 9 is a side view showing process for bonding first and second transparent bases.

### Best Mode for Carrying Out the Invention

Preferred embodiments of the present invention will now be explained in detail with reference to the attached drawings. In the following explanation, the present invention will be explained by taking an example of a multi-layered optical recording medium applied to Super Audio Compact Disc (SACD) utilizing one bit audio signal system (DSD: Direct Stream Digital) using ΣΔ modulation (sigma· delta modulation).

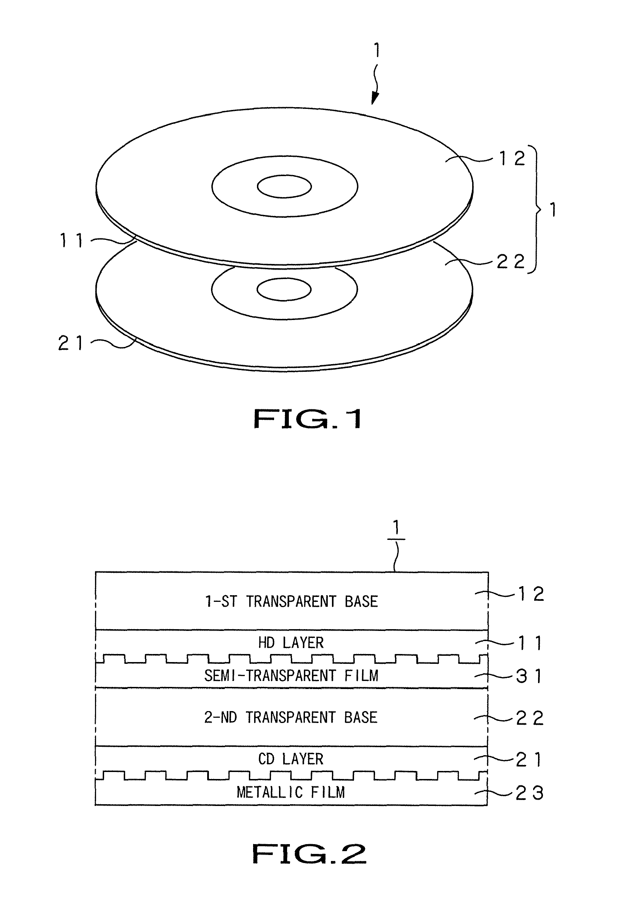

As shown in FIG. 1, the multi-layered optical recording medium 1 is the so-called hybrid disc in which one HD (High Definition) layer 11 provided with information area having high density complying with SACD and one CD layer 21 in conformity with the standard of CD (Compact Disc) are superposed so that there is provided a configuration as a single disc.

The HD layer 11 is caused to be of the configuration which can be reproduced by a DSD (Direct Stream Digital) signal. This DSD signal has high speed sampling frequency which is 64 times larger than sampling frequency (44.1 kHz) of a digital audio signal of the PCM signal system applied to the CD layer 21, and can realize signal reproduction having a frequency above audible frequency. Information recorded on the HD layer 11 is not limited to music information, but, e.g., digital data such as image, etc. based on the standard of the above-described DVD may be recorded.

At the CD layer 21, information are recorded as pit trains by the recording format in conformity with the CD standard.

Hereinafter, a reproduction signal for reproducing information recorded at the HD layer 11 will be referred to as a first reproduction signal, and a reproduction signal for reproducing information recorded at the CD layer 21 will be referred to as a second reproduction signal.

FIG. 2 shows a cross sectional view of the multi-layered optical recording medium 1 shown in FIG. 1. As shown in FIG. 2, the multi-layered optical recording medium 1 is caused to be of the configuration in which a HD layer 11, a semi-transparent film 31, a second transparent base or substrate 22, CD layer 21 and a metallic film 23 are laminated in order from a first transparent base or substrate 12.

In this example, the first and second transparent bases (substrates) 12 and 22 are transparent disc-shaped base consisting of, e.g., polycarbonate resin, acrylic resin or glass resin. Moreover, the metallic film 23 is a metallic thin film indicating reflection characteristic with respect to wavelength of a second reproduction signal.

The semi-transparent film 31 is formed on the surface of the HD layer 11, and has reflection characteristic with respect to wavelength of the first reproduction signal and has transmission characteristic with respect to the second reproduction signal. The refractive index of the semi-transparent film 31 is set to a value higher than the refractive index of the first transparent base 12. It is desirable that this refractive index is refractive index having 3.0 or more. It is desirable that the absorption coefficient is 0.05 or less.

The semi-transparent film 31 may be constituted by, e.g., Si-H compound. The Si-H compound can be generated by mixing hydrogen gas into film formed with respect to Si. It is general that the semi-transparent film 31 is formed as a film so that the film thickness becomes equal to 20 µm or less.

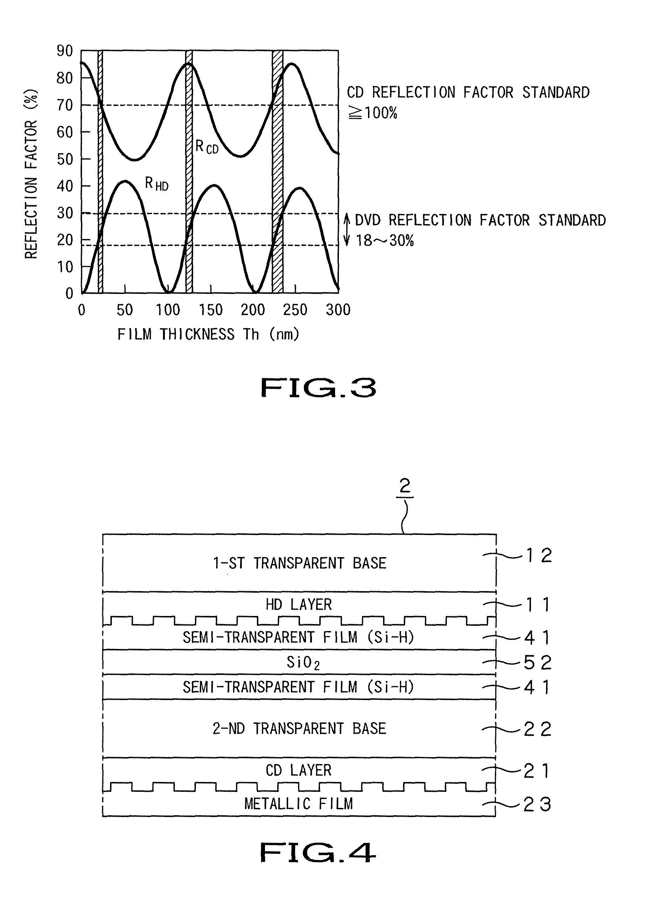

The relationship between the reflection factor R_{HD} of the HD layer 11 and the reflection factor R_{CD} of the CD layer with respect to the film thickness Th of the semi-transparent film 31 of the multi-layered optical recording medium 1 constituted as stated above is shown in FIG 3. In general, in the SACD, the standard of reflection factor required in reproducing data of the standard of CD (≥ 70%: hereinafter referred to as CD reflection factor standard) is satisfied, and the standard of reflection factor required in reproducing digital data based on the standard of DVD (18 to 30 %: hereinafter referred to as DVD reflection factor standard) is satisfied so that stable reproducing operations can be realized.

It is understood in FIG. 3 that, e.g., film thickness Th is set to a value nearly equal to 20 nm so that both the CD reflection standard and the DVD reflection factor standard as described above are satisfied. However, in setting the film thickness Th to a value of 20 mm, since allowable error range of the film thickness is narrow as shown in FIG.. 3, there is the possibility that the CD reflection factor standard or the DVD reflection factor standard may not be satisfied followed by slight difference of the film thickness Th. Moreover, in the case where the film thickness Th of the semi-transparent film 31 is set to a value nearly equal to 20 nm, particularly the reflection factor of the HD layer 11 can be only realized at a very small value of 25% or less. For this reason, there is the possibility that, in SACD in practice, reproducing operation of digital data based on the standard of DVD may become unstable.

On the contrary, it is recognized from FIG. 4 that the film thickness Th is gradually thickened so that film thickness which simultaneously satisfies both the CD reflection factor standard and the DVD reflection factor standard periodically exists. For example, the film thickness Th of the semi-transparent film 31 is set to a value nearly equal to 115 nm to thereby have ability to sufficiently increase refractive index from the HD layer 11. Moreover, it is understood that when the film thickness Th of the semi-transparent film 31 is further thickened, even in the case where, e.g., the film thickness is about 220 to 230 nm, both the CD reflection factor standard and the DVD reflection standard are simultaneously satisfied.

The periodicity of the film thickness which simultaneously satisfies both the CD reflection factor standard and the DVD reflection factor standard can be defined as below. When wavelength of the second reproduction signal is λ and the reflective index of the transparent base 12 is n, total film thickness W of the semi-transparent film 31 is expressed as α × m × λ × n. In this case, 1.0 ≤ α ≤ 1.3, and m is integer equal to 1 or more.

As stated above, in the multi-layered optical recording medium 1 to which the present invention is applied, setting is made such that film thickness W of the semi-transparent film 31 is expressed as α × m × λ × n so that specification of reflection factor in reproducing data based on both the standard of CD and that of DVD is satisfied. Thus, stable reproducing operations are realized with respect to both CD and DVD.

Particularly, in the multi-layered optical recording medium 1 to which the present invention is applied, in the case where m is set to 2 (two), since allowable error of the film thickness Th which simultaneously satisfies both the CD reflection factor standard and the DVD reflection factor standard becomes more great, greater effect or advantage can be expected.

The multi-layered optical recording medium 1 to which the present invention is applied is not limited to the above-described embodiment, but may be applied to a multi-layered optical recording medium 2 in which a semi-transparent film 41 is composed of plural layers. An example of the multi-layered optical recording medium 2 is shown in FIG. 4. In FIG 4, in regard to the same components and/or members as those of the above-described multi-layered optical recording medium, the same reference numerals are respectively attached and their detailed explanation will be omitted.

The multi-layered optical recording medium shown in FIG. 4 is caused to be of the configuration in which HD layer 11, a semi-transparent film 41, a SiO₂ layer 52, a semi-transparent film 41, a second transparent base 22, CD layer 21, and metallic film 23 are laminated.

The semi-transparent film 41 consists of Si-H compound, and is constituted by two layers in a manner such that the SiO₂ layer 52 is put therebetween. The film thickness Th of the semi-transparent film 41 can be obtained by adding thicknesses of double-layered Si-H compound. While explanation will be given in the embodiment shown below by taking an example of the case where the film thickness Th of the semi-transparent film is halved so that there is provided double layered structure, the present invention is not limited to such case, but double-layered structure may be realized at any ratio (percentage) of the film thickness.

The SiO₂ layer 52 is caused to be of the configuration having about 5 nm to 20 nm between the semi-transparent films 41 comprised of these two layers.

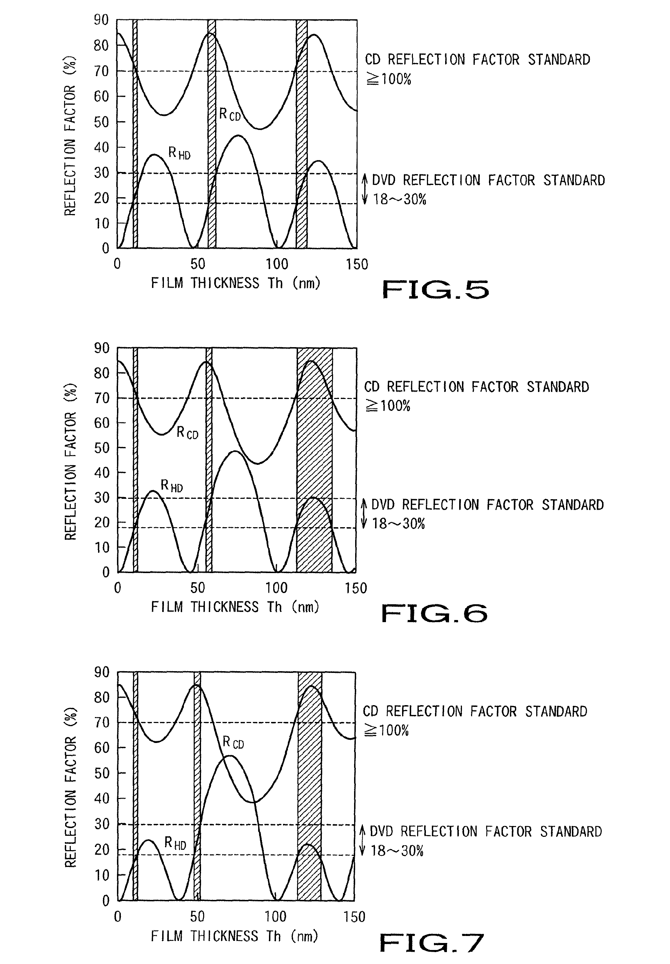

The relationship between reflection factor R_{HD} of the HD layer 11 and reflection factor R_{CD} of the CD layer 21 with respect to the film thickness Th of the semi-transparent film 41 of the multi-layered optical recording medium 2 thus constituted is shown in FIGS. 5 to 7.

Here, in the case where the film thickness of the SiO₂ layer 52 is set to 5 nm, it is understood as shown in FIG. 5 that film thickness Th which simultaneously satisfies both the CD reflection factor standard and the DVD reflection factor standard periodically exists. Similarly, in the case where the film thickness of the SiO₂ layer 52 is set to 10 nm, it is understood as shown in FIG. 6 that the film thickness which simultaneously satisfies both the CD reflection factor standard and the DVD reflection factor standard periodically exists, and the allowable error range is greatly broadened particularly within the range where the film thickness Th is 110 to 140 nm. Similarly, in the case where the film thickness of the SiO₂ layer 52 is set to 20 nm, it is understood as shown in FIG. 7 that film thickness which simultaneously satisfies both the CD reflection factor standard and the DVD reflection factor standard periodically exists, and the allowable error range is relatively broadened particularly within the range where the film thickness Th is 120 to 130 nm. Namely, when the film thickness of the SiO₂ layer 52 is set to 10 nm, the allowable error range of the film thickness Th which simultaneously satisfies both the CD reflection standard and the DVD reflection factor standard becomes larger. When the film thickness of the SiO₂ layer 52 is increased by 10 nm, such allowable error within of the film thickness Th becomes small. Accordingly, the film thickness of the SiO₂ layer 52 is constituted within the range of approximately 5 nm to 20 nm.

It is understood that the film thickness Th which simultaneously satisfies the CD reflection factor standard and the DVD reflection factor standard appears substantially at a period expressed as m × n × λ.

As stated above, in the multi-layered optical recording medium 2 to which the present invention is applied, the film thickness of the SiO₂ layer 52 caused to be laminated between the semi-transparent films 41 is constituted by about 5 nm to 20 nm to thereby have ability to enlarge (increase) the allowable error range of the film thickness Th which simultaneously satisfies the CD reflection factor standard and the DVD reflection factor standard. Thus, even when slight error of the film thickness Th takes place in the manufacturing process, it is possible to realize stable reproduction of CD and DVD.

Then, an example of a method of manufacturing the above-described multi-layered optical recording medium 1 shown in FIGS. 1 and 2 will be explained with reference to the attached drawings.

In order to manufacture such multi-layered optical recording medium 1, transparent polycarbonate resin having light transmission characteristic is injection-molded by using, e.g., metal mold unit for forming to thereby form first transparent base 12 and second transparent base 22. At this time, on one surface of the first transparent base 12, there is provided HD layer 11 in which pit patterns corresponding to digital data such as image, etc. are formed in conformity with the standard of DVD. The pit patterns constituting the HD layer 11 are formed as the result of the fact that pit patterns formed at stamper disposed within metal mold for forming are transferred. Further, semi-transparent film 31 consisting of, e.g., Si-H compound is formed as film on the HD layer 11.

Moreover, on one surface of the second transparent base 22, there is provided CD layer 21 in which pit patterns corresponding to digital data such as music information, etc. are formed in conformity with the standard of CD. The pit patterns constituting the CD layer 21 are formed as the result of the fact that pit patterns formed at stampers disposed within metal mold for forming are transferred. Further, metallic film 23 consisting of aluminum is formed as film.

As described above, the first transparent base 12 in which the HD layer is formed on one surface and the HD layer thus formed is coated so that semi-transparent film 31 is formed as film and the second transparent base 22 in which CD layer is formed on one surface and the CD layer thus formed is coated so that metallic film 23 is formed as film are bonded by using, e.g., transparent light hardening resin hardened by irradiation of ultraviolet light (UV light) to constitute the multi-layered optical recording medium 1 according to the present invention.

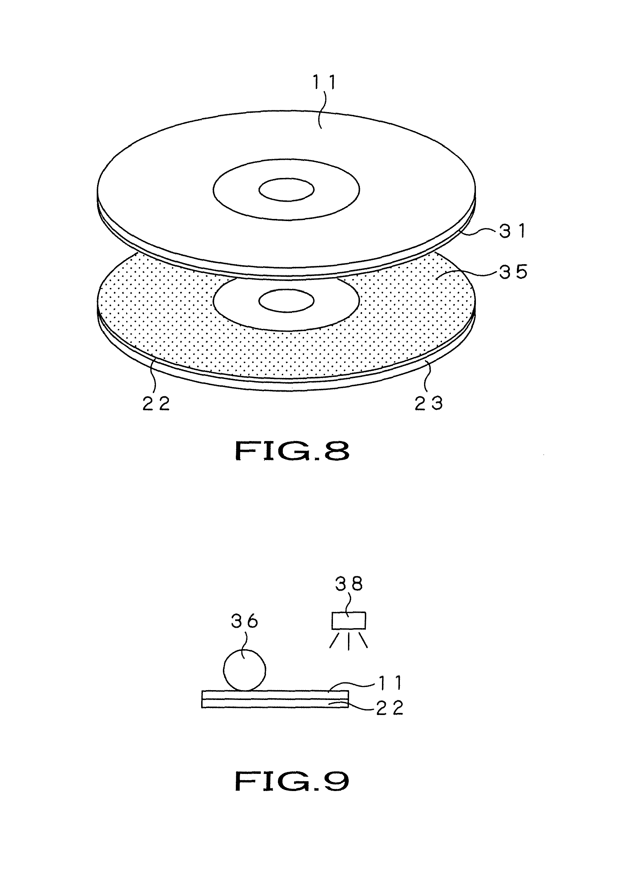

Here, a method of manufacturing the multi-layered optical recording medium 1 in which the first and second transparent bases 12, 22 are stuck. As shown in FIG. 8, light hardening resin 35 is coated onto the semi-transparent film 31 of the first transparent base 12 and at least one of plane surfaces where the metallic film 23 is formed of the second transparent base 22. Coating of the light hardening resin 35 is used by suitable coating process such as spin-coat process, etc.

Then, the first and second transparent bases are superposed. At this time, the first and second transparent bases 12, 22 are superposed in the state where the semi-transparent film 31 is positioned on the plane surface of the side opposite to the plane surface where the metallic film 23 is formed of the second transparent base 22.

Ultraviolet rays are irradiated from a ultraviolet light source 38 onto the first and second transparent bases 12, 22 superposed to each other while undergoing pressure-fitting by a pressure-fitting roller 36 to harden the light hardening resin 35 so that they are integrated. The first and second transparent bases 12, 22 which have been integrated through the light hardening resin 35 result in multi-layered optical recording medium 1 provided with multi-layered information recording layers.

It is to be noted that bonding of the first and second transparent bases are not limited to the above-described example, but various techniques used in manufacturing multi-layered optical recording medium formed by bonding plural bases may be employed as occasion demands.

It is to be noted that while the present invention has been described in accordance with certain preferred embodiments thereof illustrated in the accompanying drawings and described in detail, it should be understood by those ordinarily skilled in the art that the invention is not limited to embodiments, but various modifications, alternative constructions or equivalents can be implemented without departing from the scope and spirit of the present invention as set forth by appended claims.

## Claims

1. A multi-layered optical recording medium in which at least a first transparent base or substrate, a first information recording layer, a second transparent base or substrate and a second information recording layer are laminated in order,
wherein one semi-transparent film or more having reflection characteristic with respect to wavelength of a first reproduction signal and having transmission characteristic with respect to a second reproduction signal, and having refractive index higher than that of the first transparent base is or are formed on the first information recording layer,
a reflection film having reflection characteristic with respect to the wavelength of the second reproduction signal is formed on the second information recording layer, and
total film thickness of the semi-transparent film or films is expressed as α × m × λ × n when wavelength of the second reproduction signal is λ and refractive index of the first transparent base is n (In the above expression, 1.0 ≤ α ≤ 1.3, and m is integer equal to 1 or more).

2. The multi-layered optical recording medium according to claim 1,
wherein total film thickness of the semi-transparent film or films is expressed as 2 × α × λ × n.

3. The multi-layered optical recording medium according to claim 1,
wherein one semi-transparent film or more having reflection characteristic with respect to wavelength 650 nm of the first reproduction signal and having transmission characteristic with respect to wavelength 780 nm of the second reproduction signal is or are formed on the first information recording layer, and
a reflection film having reflection characteristic with respect to wavelength 780 nm of the second reproduction signal is formed on the second information recording layer.

4. The multi-layered optical recording medium according to claim 3,
wherein the semi-transparent film consists of Si-H compound.

5. A multi-layered optical recording medium in which at least a first transparent base or substrate, a first information recording layer, a second transparent base or substrate and a second information recording layer are laminated in order,
wherein one semi-transparent film or more having reflection characteristic with respect to wavelength of a first reproduction signal and having transmission characteristic with respect to wavelength of a second reproduction signal, and having refractive index higher than that of the first transparent base is or are formed on the first information recording layer,
a reflection film having reflection characteristic with respect to the wavelength of the second reproduction signal is formed on the second information recording layer,
the semi-transparent film is adapted so that a Si-H compound layer, a SiO₂ layer and a Si-H compound layer are laminated in order, and the SiO₂ layer has film thickness of 5 nm to 20 nm.

6. A method of manufacturing a multi-layered optical recording medium, comprising:
forming a first transparent base or substrate on which a first information recording layer is provided and a second transparent base or substrate on which a second information recording layer is provided;
subsequently forming, onto the first information recording layer provided on the first transparent base, a semi-transparent film having reflection characteristic with respect to wavelength of a first reproduction signal and having transmission characteristic with respect to wavelength of a second reproduction signal, and having refractive index higher than that of the first transparent base and film thickness expressed as α × m × λ × n when wavelength of the second reproduction signal is λ and refractive index of the first transparent base is n (In the above expression, 1.0 ≤ α ≤ 1.3, and m is integer equal to 1 or more);
forming a reflection film having reflection characteristic with respect to the wavelength of the second reproduction signal onto the second information recording layer provided on the second transparent base;
superposing the first transparent base onto a plane surface of the side opposite to the plane surface where the second information recording layer is formed of the second transparent base with a plane surface where the semi-transparent film is formed being as a superposing plane surface; and
bonding, by adhesive agent, the superposing plane surfaces of the first and second transparent bases to integrate them.
